(19) Europäisches Patentamt
European Patent Office
Office européen des brevets

(11) **EP 2 279 467 B1**

(12) **EUROPÄISCHE PATENTSCHRIFT**

(45) Veröffentlichungstag und Bekanntmachung des Hinweises auf die Patenterteilung:
**22.02.2017 Patentblatt 2017/08**

(21) Anmeldenummer: **08874261.4**

(22) Anmeldetag: **09.12.2008**

(51) Int Cl.:
*A01D 34/00* (2006.01)    *G05D 1/02* (2006.01)

(86) Internationale Anmeldenummer:
**PCT/EP2008/067112**

(87) Internationale Veröffentlichungsnummer:
**WO 2009/138140 (19.11.2009 Gazette 2009/47)**

(54) **ANSTEUERVERFAHREN FÜR EIN ROBOTERFAHRZEUG**

CONTROL METHOD FOR A ROBOT VEHICLE

PROCÉDÉ DE COMMANDE D'UN VÉHICULE ROBOTISÉ

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **15.05.2008 DE 102008001813**

(43) Veröffentlichungstag der Anmeldung:
**02.02.2011 Patentblatt 2011/05**

(73) Patentinhaber: **Robert Bosch GmbH**
**70442 Stuttgart (DE)**

(72) Erfinder:
• **BIBER, Peter**
**72070 Tuebingen (DE)**
• **ALBERT, Amos**
**71229 Leonberg (DE)**

(56) Entgegenhaltungen:
**EP-A2- 1 715 399    US-A- 5 696 675**
**US-A- 5 998 953**

EP 2 279 467 B1

**Beschreibung**

Stand der Technik

Die Erfindung betrifft ein Ansteuerverfahren für ein Roboterfahrzeug nach dem Oberbegriff des Anspruchs 1.

Ein derartiges Ansteuerverfahren ist aus der US 5,696,675 bekannt. Das bekannte, als Reinigungsfahrzeug ausgebildete Roboterfahrzeug teilt dabei eine zu reinigende Arbeitsfläche in Teilstücke auf, die jeweils unter Zuhilfenahme von Koppelnavigation mit einem bestimmten Bewegungsmuster gemäß einer Teilstück-Abfahrstrategie abgefahren werden, derart, dass sich jeweils zwei benachbarte Bahnabschnitte quer zur Fahrtrichtung des Roboterfahrzeug mit einer vorgegebenen Wahrscheinlichkeit überlappen. Genaue Strategien, wann das Roboterfahrzeug einen Richtungswechsel durchführen soll/muss, um sicherzustellen, dass eine zu bearbeitende Fläche auch vollständig gereinigt ist, sind der genannten Schrift jedoch nicht entnehmbar. Nachteilig bei derartigen, autonomen Roboterfahrzeugen, die durch Koppelnavigation, also Odemetriedaten unterstützt, angesteuert werden, ist, dass der Positionsschätzfehler quer zur Fahrtrichtung des Roboterfahrzeugs ohne Schranken mit zunehmender Wegstrecke wächst, so dass das Abfahren der gesamten Arbeitsfläche ausschließlich gestützt auf Koppelnavigation einer Zufallsnavigation gleichkommt.

Aktuell auf dem Markt erhältliche autonome Rasenmäher navigieren mittels Zufallsnavigation. Dies ist mit einigen Nachteilen behaftet. So gibt es kleine Garantie für eine vollständige Abdeckung der Arbeitsfläche; es kommt zu häufigen Mehrfachüberfahrungen und es resultiert ein unschönes Schnittbild. Eine günstige globale Ortung des Roboterfahrzeugs mit einer Genauigkeit von unter 5 cm könnte eine optimale Abfahrstrategie ermöglichen. Eine derartig genaue Ortung stellt jedoch heutzutage eine technische Barriere dar. So sind Standard-GPS-Empfänger deutlich ungenauer und andere Technologien zu kostenintensiv und zu anfällig oder erfordern eine aufwändige Installation, wie beispielsweise den Einsatz von aus der GB 2 277 152 A1 bekannten Landmarken.

Offenbarung der Erfindung

Ausgehend von dem dargestellten Stand der Technik liegt der Erfindung die Aufgabe zugrunde, ein Ansteuerverfahren für ein Roboterfahrzeug nach dem Oberbegriff des Anspruchs 1 derart weiterzubilden, dass sichergestellt ist, dass eine zu bearbeitende Arbeitsfläche vollständig bearbeitet ist. Diese Aufgabe wird erfindungsgemäß bei einem Ansteuerverfahren für ein Roboterfahrzeug mit den Merkmalen des Anspruchs 1 gelöst. Dabei ist es in einer ersten erfindungsgemäßen Variante des Ansteuerverfahrens vorgesehen, dass die Antriebsmittel derart angesteuert werden, dass ein Richtungswechsel des Roboterfahrzeugs immer dann erfolgt, sobald ein gerade von dem Roboterfahrzeug befahrener Bahnabschnitt einen zuvor abgefahrenen Bahnabschnitt nicht mehr mit der vorgegebenen Wahrscheinlichkeit überlappt. Anders ausgedrückt wird ein Teilstück in Fahrtrichtung dadurch begrenzt, dass zu einem definierten Zeitpunkt bzw. nach einer definierten Wegstrecke ein Richtungswechsel des Roboterfahrzeugs eingeleitet wird, nämlich immer dann, wenn eine Überdeckung, im Idealfall bevorzugt paralleler Bahnabschnitte, nicht mehr mit einer gewissen Wahrscheinlichkeit garantiert ist. Dabei handelt es sich im einfachsten Falle bei der definierten Wegstrecke um eine Konstante, die abhängig vom Fehlermodell der Koppelnavigation ist. Besonders bevorzugt wird ein Richtungswechsel bereits dann eingeleitet, wenn eine Mindestüberlappung mit einer vorgegebenen Wahrscheinlichkeit nicht mehr garantiert ist. Anders ausgedrückt ist in Weiterbildung der Erfindung mit Vorteil vorgesehen, dass das Roboterfahrzeug so lange geradeaus fährt, solange sich zwei benachbarte Bahnabschnitte mit einer vorgegebenen Wahrscheinlichkeit quer zur Fahrtrichtung überlappen. Um die Genauigkeit der Teilstücknavigation zu erhöhten, ist es möglich, ein oder mehrmals pro Teilstück, insbesondere über einen längeren Zeitraum, im Stillstand die Positionsschätzung einzelner Positionen durch Mittlung über mehrere Satellitenortungsergebnisse zu verbessern, wenn als später noch zu erläuternde übergeordnete Abfahrstrategie eine setellitengestützte Navigation eingesetzt wird. Insgesamt kann im Zusammenspiel mit den Odometriedaten und/oder den Inertialsensorikwerten über bekannte Techniken, wie beispielsweise eine Least-Square-Optimierung eine verbesserte Vernetzung der Dimensionen des Teilstücks erzielt werden.

In alternativer Ausgestaltung der Wendestartegie gemäß des Anspruchs 1 wird vorgeschlagen, dass die Antriebsmittel derart angesteuert werden, dass ein Richtungswechsel des Roboterfahrzeugs immer dann initiiert wird, wenn ein Positionsschätzfehler quer zur Fahrtrichtung des Roboterfahrzeug nicht mehr mit einer vorgegebenen Wahrscheinlichkeit, beispielsweise 95 %, unter einem Grenzwert liegt. Bei dem Positionsschätzfehler handelt es sich dabei um die Differenz aus einem von der Koppelnavigation ermittelten Positionsschätzwert (geschätzter Versatz) und der nicht bekannten, tatsächlichen Position (tatsächlicher Versatz) quer zur Fahrtrichtung.

Algorithmisch wird die Teilstück-Abfahrstrategie bevorzugt derart realisiert, dass mit der Standardabweichung des Positionsschätzfehlers, die bevorzugt laufend von einer Koppelnavigation ermittelt wird, operiert wird. Mit dem Begriff Standardabweichung ist in Weiterbildung der Erfindung auch die entsprechende Ausgabe eines Kalmanfilters gemeint, der neben den Odometriedaten auch Daten zusätzlicher Sensoren, wie z. B. Kompass und/oder Drehratensensor verarbeitet. Sobald diese Standardabweichung einen Grenzwert erreicht, wird in wiederum alternativer, erfindungsgemäßer Wendestretegie eine Wende des Roboterfahrzeugs initiiert. Hierbei wird die maximal in eine Richtung in einem Teilstück zurückzulegende Entfernung, bis eine Wende eingeleitet wird, so gewählt, dass mit dem als bekannt vorrausgesetzten Fehlermodell der Koppelnavigation eine Überlappung mit wählbarer Wahrscheinlichkeit gewährleistet ist. Im einfachsten Fall handelt es sich bei der Strecke, nach der eine Wende vollführt wird, um eine Konstante, die vom, insbesondere bekanten Fehlermodell der Koppelnavigation abhängt.

Vorteilhafte Weiterbildungen der Erfindung sind in den Unteransprüchen aufgeführt.

In Weiterbildung der Erfindung ist mit Vorteil vorgesehen, dass der Teilstück-Abfahrstrategie, mit der die einzelnen Teilstücke in, vorzugsweise zumindest näherungsweise parallelen, Bahnabschnitten abgefahren werden eine die Teilstücke koordinierende (globale) Abfahrstrategie übergeordnet ist. Die übergeordnete Abfahrstrategie verknüpft dabei die einzelnen Teilstücke untereinander, vorzugsweise derart, dass sich die Teilstücke nicht oder nur geringfügig überlappen. Im einfachsten Fall handelt es sich bei der übergeordneten Abfahrstrategie, wie später noch erläutert werden wird, um eine Zufallsstrategie (Zufallsnavigation). Selbst bei der Ausbildung der übergeordneten Abfahrstrategie als Zufallsnavigationsstrategie wird durch das Abfahren der Arbeitsfläche in mehreren Teilstücken jeweils mit sich in quer zur Fahrtrichtung des Roboterfahrzeugs überlappenden Bahnabschnitten, im Vergleich zu einer vollständigen Zufallsnavigation ein verbessertes Schnittbild erreicht und Mehrfachüberfahrungen werden minimiert. Besonders bevorzugt ist eine Ausführungsform, bei der der Grenzwert, unter dem die Standardabweichung des Positionsschätzfehlers eines Bahnabschnittes bleiben muss, damit das Roboterfahrzeug weiter geradeaus fährt, unter Berücksichtigung der Positionsschätzfehler zweier benachbarter, sich überlappenden Bahnabschnitten (bei einem mäanderförmigen Bewegungsmuster: Hin- und Rückfahrt) berechnet wird. Unter Zugrundelegung einer Normalverteilung für den Positionsschätzfehler und einer vorgegebenen Wahrscheinlichkeit von 95 % bei einem mäanderförmigen Bewegungsmuster ergibt sich beispielsweise für den Grenzwert, den die Standardabweichung des Positionsschätzfehlers erreichen muss, folgender Zusammenhang:

$$\text{Grenzwert} = \ddot{\text{U}}\text{berlappung}/(2* \ \text{sqrt}(2)).$$

Sobald ein Teilstück abgearbeitet wurde wird ein neues Teilstück begonnen. Zur Wahl und Anfahrt des neuen Teilstücks dient dabei die eingangs erwähnte übergeordnete Abfahrstrategie.

Besonders bevorzugt ist eine Ausführungsform, bei der das Bewegungsmuster gemäß der Teilstück-Abfahrstrategie ein mäanderförmiges Muster ist, bei dem eine Vielzahl von im Idealfall parallelen Bewegungsbahnen realisiert sind. Zum Anfahren von jeweils benachbarten Bahnabschnitten muss das Roboterfahrzeug nach jedem Bahnabschnitt dabei eine 180°-Wende durchführen.

Als Entscheidungsgrundlage dafür, wann das Abfahren bzw. Abarbeiten eines Teilstücks beendet wird, gibt es mehrere Möglichkeiten. So kann die Bearbeitung eines Teilstücks beispielsweise nach einer vorgegebenen Zeit abgebrochen werden. Alternativ ist es möglich, die Bearbeitung eines Teilstücks nach einer bestimmten, abgefahrenen Gesamtstrecke zu beenden. Besonders bevorzugt ist es, wenn das Abfahren eines Teilstücks dann beendet wird, wenn mittels geeigneter Sensorik erkannt wird, dass eine Grenze der Arbeitsfläche erreicht wird und/oder wenn durch eine geeignete Sensorik erkannt wird, dass ein bereits abgefahrenes Teilstück erreicht wird. Hierzu wird beispielsweise mit einer geeigneten Sensorik, insbesondere optisch, überwacht, ob der im Moment überfahrene oder der demnächst zu überfahrende Untergrund bereits gemäht ist oder noch nicht. Sobald ein bereits gemähter Untergrund detektiert wird, kann die Bearbeitung eines Teilstücks abgebrochen und ein Startpunkt eines weiteren Teilstücks mit Hilfe der übergeordneten Abfahrstrategie angefahren werden.

Bei Erkennen der Grenze der Arbeitsfläche oder eines bereits bearbeiteten Teilstücks muss nicht zwangsläufig die Bearbeitung des momentan bearbeiteten Teilstücks unterbrochen werden - es reicht aus, wenn ein Richtungswechsel innerhalb des momentan bearbeiteten Teilstücks vollführt wird.

Besonders bevorzugt ist eine Ausführungsform, bei der, insbesondere nach der Bearbeitung eines Teilstücks die Dimensionen (Flächenerstreckung) des bearbeiteten Teilstücks, insbesondere mit assoziierten Genauigkeiten, abgespeichert werden. Bevorzugt werden diese abgespeicherten Daten in einer übergeordneten Abfahrstrategie berücksichtigt, insbesondere derart, dass sich zwei unterschiedliche Teilstücke nicht oder nur bis zu einem maximalen Wert überlappen, um Mehrfachüberfahrungen so weit wie möglich zu minimieren. Zusätzlich oder alternativ dienen die gespeicherten Informationen zur Bestimmung eines Startpunktes für ein neues Teilstück.

Im Hinblick auf die konkrete Ausgestaltung der übergeordneten Abfahrstrategie gibt es unterschiedlichste Möglichkeiten. Im einfachsten Fall handelt es sich bei der übergeordneten Abfahrstrategie, wie zuvor erwähnt, um eine Zufallsnavigationsstrategie - anders ausgedrückt wird nach der Vollendung eines Teilstücks der Startpunkt des nächsten Teilstückes zufällig ausgewählt. Bevorzugt wird bei dieser Zufallsnavigationsstrategie der Bearbeitungszustand der Arbeitsfläche gemäß der Teilstück-Abfahrstrategie berücksichtigt. Anders ausgedrückt wird die Bearbeitung eines Teilstücks dann abgebrochen, sobald festgestellt wird, dass das gerade abgefahrene Teilstück ein weiteres Teilstück, zumindest zum Großteil, überlappt.

Besonders bevorzugt ist eine Ausführungsform, bei der die übergeordnete Abfahrstrategie eine satellitennavigationsgestützte Abfahrstrategie ist. Dabei können selbst mit einer Low-Cost-Ortung Genauigkeiten unter 3 Metern und unter Zuhilfenahme von differentiellen Korrektursignalen wie WAAS/EGNOS oder einem stationären zweiten Empfänger, der beispielsweise in einer Basisstation eingebaut sein kann, teilweise auch Submetergenauigkeiten realisiert werden. Besonders bevorzugt ist dabei eine Ausführungsform, bei der die bereits bearbeiteten Teilstücke, insbesondere mit pessimistisch geschätzten Flächendimensionen, in eine digitale Karte der Arbeitsfläche eingezeichnet (berücksichtigt) werden. Dabei ist unter einer digitalen Karte nicht zwangsweise eine grafische Ausgestaltung zu verstehen - vielmehr kann es sich dabei in einer einfachsten Ausführungsform um, insbesondere in Tabellen gespeicherte Koordinaten der Arbeitsfläche handeln. Wird also beispielsweise der Fehler bei der Abarbeitung eines Teilstückes auf 1 Meter Randabstand geschätzt, so wird aus einer Rechteckfläche des Teilstückes mit den Koordinaten (0,0) zu (10,6) ein Rechteck von (1,1) zu (9,5).

Zusätzlich oder alternativ zum Einsatz einer satellitenbasierten übergeordneten Navigation ist es möglich, eine visuelle Navigation zur Unterstützung der übergeordneten Abfahrstrategie zu realisieren. Bei dieser Ausführungsvariante ist das Roboterfahrzeug vorzugsweise mit einer Kamera, insbesondere einer Panoramakamera, ausgestattet. Das Roboterfahrzeug kann dann, insbesondere an einer freien Grenze eines Teilstücks, ein Bild aufnehmen und speichern. Das Roboterfahrzeug kann nun einen noch nicht bearbeiteten Bereich, also ein nicht bearbeitetes Teilstück auf der Arbeitsfläche mittels bekannter Methoden des Visual-Homings anfahren. Dies kann beispielsweise dadurch realisiert werden, dass die Antriebsmittel des Roboterfahrzeugs so angesteuert werden, dass die Bilddifferenz im Sinne der Summe von Differenzquadraten minimiert wird. Auf diese Weise ist es möglich, innerhalb eines Teilstücks (Bildausschnitts) mit hoher Genauigkeit zu navigieren. Insbesondere dann, wenn die Nachbarschaftsbeziehung zwischen Teilstücken gespeichert wird, ist es möglich, auch zwischen Teilstücken zu navigieren und so sämtliche noch nicht bearbeite Stellen des Arbeitsbereichs anzufahren, bis eine vollständige Abdeckung erreicht ist. Zusätzlich oder alternativ zur Aufnahme eines Bildes kann ein anderer Sensor zum Einsatz kommen, beispielsweise ein Laser- oder ein Ultraschallsensor.

Wie zuvor im Zusammenhang mit der satellitengestützten übergeordneten Abfahrstrategie erläutert, ist es möglich, die bereits abgearbeiteten Teilstücke, vorzugsweise mit einer pessimistisch geschätzten Flächenerstreckung, in eine digitale Karte einzutragen, sodass beispielsweise von der berechneten Teilstückfläche ein umlaufender Rand von einer bestimmten Breite, beispielsweise von 1 m abgezogen wird. Zusätzlich oder alternativ zu einem pessimistisch geschätzten Fehler kann auch eine probabilistische digitale Bedeckungskarte der Arbeitsfläche angelegt werden, in der eingetragen wird, mit welcher Wahrscheinlichkeit bestimmte Stellen bereits abgefahren wurden. Auf diese Weise lassen sich mit hoher Wahrscheinlichkeit bereits bearbeitete Teilbereiche identifizieren und es ist möglich, nach der Bearbeitung eines Teilstückes ein neues Teilstück zu beginnen, das mit hoher Wahrscheinlichkeit noch nicht bearbeitet wurde. Auch hierzu werden bevorzugt die als frei gekennzeichneten Bereiche zwischen den eingezeichneten Teilstücken als mögliche Anfahrpunkte verwendet, wobei auch diese Anfahrpunkte bevorzugt auf Basis einer pessimistischen Flächenschätzung der bereits bearbeiteten Teilstücke ins Innere der Teilstücke verschoben werden.

Die Erfindung führt auch auf ein autonom arbeitendes Roboterfahrzeug, insbesondere ein Rasenmäherfahrzeug. Besonders bevorzugt ist dabei eine Ausführungsform, bei der das Roboterfahrzeug derart ausgebildet ist, dass mit diesem ein zuvor beschriebenes Ansteuerverfahren realisierbar ist. Insbesondere weist das Roboterfahrzeug hierzu Ansteuermittel auf, die eine Teilstück-Abfahrstrategie mit einer übergeordneten Abfahrstrategie verknüpfend ausgebildet sind.

Kurze Beschreibung der Zeichnungen

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:

Fig. 1a    in einer schematischen Darstellung ein Bewegungsmuster einer Teilstück-Abfahrstrategie zur Abfahrung eines Teilsstücks einer Arbeitsfläche,

Fig. 1b    den Verlauf der Standard-Abweichung des Positionsschätzfehlers für die zumindest näherungsweise parallelen Bahnabschnitte des Bewegungsmusters aus Fig. 1a und

Fig. 2    ein auf einer digitalen Karte der Arbeitsfläche eingetragenes, mit einer Mäanderstrategie abgefahrenes Teilstück, dessen mit Hilfe von Satellitennavigation ermittelte Flächenerstreckung lediglich als pessimistische Schätzung berücksichtig ist.

Ausführungsformen der Erfindung

In den Figuren sind gleiche Elemente und Elemente mit der gleichen Funktion mit den gleichen Bezugszeichen gekennzeichnet.

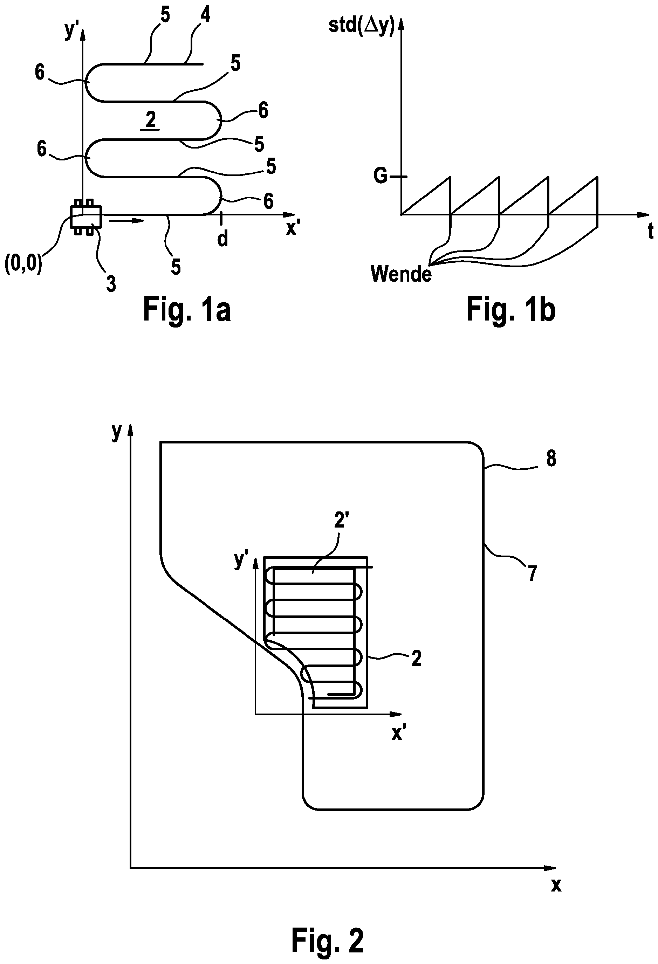

In Fig. 1a ist schematisch in einem kartesischen Teilstückkoordinatensystem 1 (x', y') ein Teilstück 2 dargestellt, das mittels eines Roboterfahrzeugs 3 gemäß einer Teilstück-Abfahrstrategie mit einem mäanderförmigen Bewegungsmuster 4 abgefahren wird. Das Bewegungsmuster 4 umfasst eine Vielzahl von zueinander im Wesentlichen parallelen Bahnabschnitten 5, wobei jeweils zwei benachbarte Bahnabschnitte 5 über jeweils eine 180°-Wende 6 (Wendebahnabschnitt) miteinander verbunden sind. Die Fahrtrichtung des Roboterfahrzeugs 3 entlang der Bahnabschnitte 5 erfolgt entlang der x'-Achse. Von der Koppelnavigation wird laufend ein Positionsschätzfehler in y'-Richtung, d. h. quer zur Fahrtrichtung ermittelt - ebenso die zugehörige Standardabweichung std($\Delta$y).

Auf der x'-Achse ist die Strecke d eingezeichnet, an der das Roboterfahrzeug 3 unter Realisierung eines nicht eingezeichneten Versatzes b zum zuvor befahrenen Bahnabschnitt 5 wendet und den nächsten Bahnabschnitt 5 in die entgegengesetzte Richtung beginnt. Bei der Strecke d handelt es sich im einfachsten Fall um eine Konstante, die vom Fehlermodell der Roboter-Koppelnavigation abhängt. Unter Berücksichtigung einer vorgegebenen Überlappung b ergibt sich die Strecke d aus einer Betrachtung der Standardabweichung std($\Delta$y), wie diese in Fig. 1b eingezeichnet ist. Zu erkennen ist, dass die Standardabweichung std($\Delta$y) in jedem Bahnabschnitt 5 linear bis zu einem Grenzwert G zunimmt. Bei Erreichen des Grenzwertes G ist die Strecke d zurückgelegt und es wird eine Wende des Roboterfahrzeugs 3 initiiert. Der Grenzwert G wird bei dem gezeigten mäanderförmigen Bewegungsmuster 4 und einer übergebenen Überlappung b so berechnet, dass für eine Wahrscheinlichkeit von hier 95 % eine Überlappung zweier benachbarter Bahnabschnitte 5 sichergestellt ist. Der Grenzwert G entspricht unter Zugrundelegung einer Normalverteilung:

$$G = b/(2 * sqrt(2)).$$

Bei Zugrundelegung anderer Wahrscheinlichkeiten ergeben sich entsprechend angepasste Grenzwerte.

In Fig. 2 ist eine digitale Karte 7 einer mit Hilfe des Roboterfahrzeugs 3 abzufahrenden Arbeitsfläche 8 gezeigt. Der digitalen Karte liegt das kartesische Koordinatensystem x,y zugrunde, in dem das Teilstück 2 mit seinem Teilstückkoordinatensystem 1 (x', y') aufgezeichnet ist. In der digitalen Karte 7 der Arbeitsfläche 8 ist ein mit Hilfe des Roboterfahrzeugs 3 abgefahrenes Teilstück 2 eingezeichnet. Dabei wird lediglich die mit dem Bezugszeichen 2' gekennzeichnete, pessimistische Flächenerstreckung des Teilstückes 2 gespeichert. Diese pessimistische Flächenerstreckung 2' wird durch Abziehen eines Randstreifens mit vorgegebener Breitenerstreckung ermittelt.

Nach Bearbeitung des Teilstücks 2 wird ein weiteres, nicht gezeigtes Teilstück durch eine übergeordnete Abfahrstrategie angesteuert. Diese basiert beispielsweise auf einer Zufallsnavigation und/oder ist satellitengestützt und/oder basiert auf einer visuellen Navigation, insbesondere unter Berücksichtigung einer dem Roboterfahrzeug 3 integralen Panoramakamera.

**Patentansprüche**

**1.** Ansteuerverfahren zum Ansteuern von zum Lenken und Fortbewegen eines, insbesondere als Rasenmäherfahrzeug ausgebildeten, Roboterfahrzeugs (3) auf einer Arbeitsfläche (8) ausgebildeten Antriebsmitteln, wobei die Antriebsmittel derart angesteuert werden, dass mit dem Roboterfahrzeug (3) mehrere Teilstücke (2) der Arbeitsfläche (8) unter Zuhilfenahme von Koppelnavigation jeweils in einem bestimmten Bewegungsmuster gemäß einer Teilstück-Abfahrstrategie abgefahren werden, derart dass sich jeweils zwei benachbarte Bahnabschnitte (5) quer zur Fahrtrichtung des Roboterfahrzeugs (3) mit einer vorgegebenen Wahrscheinlichkeit überlappen, **dadurch gekennzeichnet,** **dass** gemäß der Teilstück-Abfahrstrategie die Antriebsmittel derart angesteuert werden, dass ein Richtungswechsel des Roboterfahrzeugs (3) erfolgt, sobald sich ein im Moment vom Roboterfahrzeug (3) befahrener Bahnabschnitt (5) und ein davor abgefahrener Bahnabschnitt (5) sich nicht mehr mit der vorgegebenen Wahrscheinlichkeit überlappen, oder dass ein Richtungswechsel des Roboterfahrzeugs (3) erfolgt, wenn ein Positionsschätzfehler quer zu Fahrrichtung des Roboterfahrzeugs (3) nicht mehr mit einer vorgegebenen Wahrscheinlichkeit unter einem Grenzwert (G) liegt, oder dass ein Richtungswechsel dann erfolgt, wenn die Standardabweichung einen Grenzwert (G) erreicht.

**2.** Ansteuerverfahren nach Anspruch 1, **dadurch gekennzeichnet,**

**dass** die Position der Teilstücke (2) auf der Arbeitsfläche (8) mit Hilfe einer übergeordneten Abfahrstrategie festgelegt wird.

3. Ansteuerverfahren nach Anspruch 1,
**dadurch gekennzeichnet,**
**dass** der Grenzwert (G) auf der Basis einer vorgegebenen Wahrscheinlichkeit und einer vorgegeben Überlappung der benachbarten Bahnabschnitte (5) sowie unter Berücksichtigung der Summe der Positionsschätzfehler der benachbarten Bahnabschnitte (5) berechnet wird.

4. Ansteuerverfahren nach einem der vorhergehenden Ansprüche,
**dadurch gekennzeichnet,**
**dass** das Bewegungsmuster (4) gemäß der Teilstück-Abfahrstrategie mäanderförmig ist und dass der Richtungswechsel als 180°-Wende durchgeführt wird.

5. Ansteuerverfahren nach einem der vorhergehenden Ansprüche,
**dadurch gekennzeichnet,**
**dass** das Abfahren eines Teilstücks (2) beendet wird, wenn eine vorgegebene Wegstrecke zurückgelegt wurde und/oder wenn eine vorgegebene Abfahrzeit abgelaufen ist und/oder wenn eine Grenze der Arbeitsfläche (8) erreicht wird und/oder wenn ein bereits abgefahrenes, insbesondere bearbeitetes, Teilstück (2) erreicht wird.

6. Ansteuerverfahren nach einem der Ansprüche 2 bis 5,
**dadurch gekennzeichnet,**
**dass** die übergeordnete Abfahrstrategie eine Zufallsnavigationsstrategie, insbesondere unter Berücksichtigung des Bearbeitungszustandes des Arbeitsbereichs, ist.

7. Ansteuerverfahren nach einem der Ansprüche 2 bis 5,
**dadurch gekennzeichnet,**
**dass** die übergeordnete Abfahrstrategie eine satellitennavigationsgestützte Abfahrstrategie ist.

8. Ansteuerverfahren nach einem der vorhergehenden Ansprüche,
**dadurch gekennzeichnet,**
**dass** die übergeordnete Abfahrstrategie eine visuelle Navigationsstrategie, vorzugsweise unter Einsatz mindestens einer Panoramakamera ist.

9. Ansteuerverfahren nach einem der vorhergehenden Ansprüche,
**dadurch gekennzeichnet,**
**dass** die Teilstücke (2), vorzugsweise mit einer pessimistisch geschätzten Flächenerstreckung, in eine digitale Karte (7) eingetragen werden.

10. Ansteuerverfahren nach einem der vorhergehenden Ansprüche,
**dadurch gekennzeichnet,**
**dass** eine digitale probabilistische Bedeckungskarte der Arbeitsfläche (8) erstellt wird, aus der ersichtlich ist, welche Bereiche der Arbeitsfläche (8) mit welcher Wahrscheinlichkeit abgefahren wurden.

**Claims**

1. Control method for controlling drive means which are designed to steer and move a robot vehicle (3), embodied, in particular, as a lawnmower vehicle, on a working surface (8), wherein the drive means are controlled in such a way that a plurality of surface-sections (2) of the working surface (8) are travelled along with the robot vehicle (3) with the aid of compound navigation, in each case in a specific movement pattern according to a strategy for travelling along the surface-section, in such a way that there is a predefined probability of in each case two adjacent path sections (5) overlapping transversely with respect to the direction of travel of the robot vehicle (3),
**characterized**
**in that** according to the strategy for travelling along the surface-section the drive means are controlled in such a way that a change of direction of the robot vehicle (3) takes place as soon as there is no longer the predefined probability of a path section (5) travelled along by the robot vehicle (3) at that moment overlapping with a path section (5) which has been travelled along before it, or in that a change of direction of the robot vehicle (3) takes place if there is no longer a predefined probability of a position estimation error in the transverse direction with respect to the direction of travel of the robot vehicle (3) being below a limiting value (G), or in that a change of direction takes place if the standard deviation reaches a limiting value (G).

2. Control method according to Claim 1,
**characterized**
**in that** the position of the surface-sections (2) on the working surface (8) is defined with the aid of a superordinate strategy for travelling along.

3. Control method according to Claim 1,
**characterized**
**in that** the limiting value (G) is calculated on the basis of a predefined probability and a predefined overlap of the adjacent path section (5) and taking into account the sum of the position estimation error of the adjacent path sections (5).

4. Control method according to one of the preceding claims,
**characterized**
**in that** the movement pattern (4) in accordance with the strategy for travelling along the surface-section is in a meandering shape, and in that the change of direction is carried out as a 180° turn.

5. Control method according to one of the preceding claims,
**characterized**
**in that** the travelling along a surface-section (2) is ended if a predefined distance has been covered and/or if a predefined travel-along time has expired and/or if a boundary of the working surface (8) is reached and/or if a surface-section (2) which has already been travelled along, in particular has been processed, is reached.

6. Control method according to one of Claims 2 to 5,
**characterized**
**in that** the superordinate strategy for travelling along is a random navigation strategy, in particular taking into account the processing state of the working area.

7. Control method according to one of Claims 2 to 5,
**characterized**
**in that** the superordinate strategy for travelling along is a satellite-navigation-assisted strategy for travelling along.

8. Control method according to one of the preceding claims,
**characterized**
**in that** the superordinate strategy for travelling along is a visual navigation strategy, preferably using at least one panoramic camera.

9. Control method according to one of the preceding claims,
**characterized**
**in that** the surface-sections (2) are preferably entered with a pessimistically estimated surface extent into a digital map (7).

10. Control method according to one of the preceding claims,
**characterized**
**in that** a digital probabilistic coverage map of the working surface (8) is produced, from which coverage map the probability of which areas of the working surface (8) were travelled along is apparent.

**Revendications**

1. Procédé de commande destiné à commander des moyens d'entraînement réalisés de manière à diriger et propulser un véhicule robotisé (3) sur une surface de travail (8), notamment réalisés sous la forme d'un véhicule de tonte, dans lequel les moyens d'entraînement sont commandés de manière à ce que plusieurs sections (2) de la surface de travail (8) soient respectivement parcourues par le véhicule robotisé (3) avec l'aide d'une navigation à l'estime suivant un profil de mouvement déterminé conformément à une stratégie de parcours de section, de manière à ce que deux sections de trajet (5) voisines se chevauchent respectivement avec une probabilité prédéterminée transversalement à la direction de déplacement du véhicule robotisé (3),

**caractérisé en ce que**, conformément à la stratégie de parcours de section, les moyens d'entraînement sont commandés de manière à ce qu'un changement de direction du véhicule robotisé (3) soit effectué dès qu'une section de trajet (5) parcourue par le véhicule robotisé (3) et qu'une section de trajet (5) préalablement parcourue ne se chevauchent plus à l'instant présent avec la probabilité prédéterminée, ou à ce qu'un changement de direction du véhicule robotisé (3) soit effectué lorsqu'une erreur d'estimation de position transversalement à la direction de déplacement du véhicule robotisé (3) ne se situe plus en-dessous d'une valeur limite (G) avec une probabilité prédéterminée, ou à ce qu'un changement de direction ne soit effectué que si l'écart type atteint une valeur limite (G).

2. Procédé de commande selon la revendication 1, **caractérisé en ce que** la position des sections (2) sur la surface de travail (8) est établie à l'aide d'une stratégie de parcours de niveau supérieur.

3. Procédé de commande selon la revendication 1, **caractérisé en ce que** le valeur limite (G) est calculée sur la base d'une probabilité prédéterminée et d'un chevauchement prédéterminé des sections de trajet (5) voisines ainsi qu'en tenant compte de la somme des erreurs d'estimation de position des sections de trajet (5) voisines.

4. Procédé de commande selon l'une quelconque des revendications précédentes, **caractérisé en ce que** le profil de mouvement (4), conformément à la stratégie de parcours de section, présente la forme de méandres et **en ce que** le changement de direction est effectué sous la forme de virages à 180°.

5. Procédé de commande selon l'une quelconque des revendications précédentes, **caractérisé en ce que** le parcours d'une section (2) se termine lorsqu'un tronçon de parcours prédéterminé a été parcouru et/ou lorsqu'un temps de parcours prédéterminé s'est écoulé et/ou lorsqu'une limite de la surface de travail (8) est atteinte et/ou lorsqu'une section (2) déjà parcourue, notamment traitée, est atteinte.

6. Procédé de commande selon l'une quelconque des revendications 2 à 5, **caractérisé en ce que** la stratégie de parcours de niveau supérieur est une stratégie de navigation aléatoire, notamment tenant compte de l'état de traitement de la zone de travail.

7. Procédé de commande selon l'une quelconque des revendications 2 à 5, **caractérisé en ce que** la stratégie de parcours de niveau supérieur est une stratégie de parcours assistée par navigation par satellite.

8. Procédé de commande selon l'une quelconque des revendications précédentes, **caractérisé en ce que** la stratégie de parcours de niveau supérieur est une stratégie de navigation visuelle, utilisant de préférence au moins une caméra panoramique.

9. Procédé de commande selon l'une quelconque des revendications précédentes, **caractérisé en ce que** les sections (2) sont de préférence enregistrées dans une carte numérique (7) avec une étendue superficielle estimée de manière pessimiste.

10. Procédé de commande selon l'une quelconque des revendications précédentes, **caractérisé en ce qu'**une carte numérique d'occupation probabiliste de la surface de travail (8) est établie, permettant de visualiser les régions de la surface de travail (8) qui ont été parcourues avec les probabilités correspondantes.

**Fig. 1a**

**Fig. 1b**

**Fig. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5696675 A
- GB 2277152 A1